# EUROPÄISCHE PATENTSCHRIFT

(11) **EP 1 482 805 B1**
(45) Veröffentlichungstag und Bekanntmachung des Hinweises auf die Patenterteilung: **20.02.2008**
(21) Anmeldenummer: 03720125.8
(22) Anmeldetag: 24.02.2003
(51) Int. Cl.: A22C 13/00

(54) **NAHRUNGSMITTELHULLE MIT RAUHER UND NATURLICH WIRKENDER OBERFLACHE**
FOODSTUFF WRAPPING HAVING A ROUGH AND NATURALLY APPEARING SURFACE
ENVELOPPE ALIMENTAIRE DONT LA SURFACE PRESENTE UN ASPECT RUGUEUX D'APPARENCE NATURELLE

(30) Priorität: 01.03.2002 DE 10208858
(43) Veröffentlichungstag der Anmeldung: 08.12.2004
(73) Patentinhaber: Kalle GmbH, 65203 Wiesbaden (DE)
(72) Erfinder: STALBERG, Stefanie, 65232 Taunusstein-Wehen (DE); AUF DER HEIDE, Christian, 49080 Osnabrück (DE); AUF DER HEIDE, Dirk, 49594 Alfhausen (DE); KALLWEIT, Jürg-Heinrich, 49076 Osnabrück (DE)
(74) Vertreter: Plate, Jürgen
(86) Internationale Anmeldenummer: PCT/DE2003/000559
(87) Internationale Veröffentlichungsnummer: WO 2003/073862

(56) Entgegenhaltungen:
- EP-A- 0 127 296
- EP-A- 0 962 145
- WO-A-02/00026
- WO-A-99/07227
- DE-A- 4 141 292
- DE-A- 10 125 207
- DE-A- 19 645 276
- DE-U- 8 708 867
- US-A- 4 303 711

## Beschreibung

Die vorliegende Erfindung betrifft eine ein- oder mehrschichtige Nahrungsmittelhülle aus einem thermoplastischen Gemisch, das mindestens ein aliphatisches Polyamid und/oder Copolyamid umfaßt, sowie ihre Verwendung als künstliche Wursthülle, insbesondere für geräucherte Brühwurst.

Nahrungsmittelhüllen, speziell Wursthüllen, werden aus Naturdarm, Textil-, Faser- oder Cellulosedarm, Kollagen oder Kunststoff hergestellt. Der Kollagen- bzw. Hautfaserdarm zeichnet sich zwar durch eine natürliche Oberfläche und eine angenehme Haptik aus, wird aber nach einem sehr aufwendigen und umweltbelastenden Verfahren aus Rinderhäuten hergestellt. Das Hautgewebe wird mit Säuren (z.B. Milchsäure) bis zu den Fibrillen aufgeschlossen; die hochviskose Masse wird extrudiert und mit gasförmigem Ammoniak oder Ammoniumhydroxid langsam und kompakt ausgefällt und verfestigt. Beim Trocknen erfolgt dann eine Vernetzung (Härtung), um den Produkten eine ausreichende Stabilität zu verleihen, so daß sie den Brühprozeß ohne wesentlichen Festigkeitsverlust überstehen. Naturdärme wie auch Hautfaserdärme werden jedoch aufgrund verschiedener Vorfälle, wie der BSE-Seuche bei Rindern und dem Mißbrauch von Antibiotika, von den Endverbrauchern zunehmend weniger akzeptiert. Es drohen außerdem gesetzliche Beschränkungen. Eine Alternative zu den genannten Därmen ist daherwünschenswert. Cellulosedärme, selbst solche mit Faserverstärkung, können diese Aufgabe nur eingeschränkt übernehmen. Auch ist deren Herstellverfahren nicht weniger aufwendig und umweltschädigend als das Kollagenverfahren.

Weiterhin besitzen Cellulose- und Kollagenhüllen nicht nur eine hohe Rauch-, sondern auch eine hohe Wasserdampfdurchlässigkeit. Die Durchlässigkeit beträgt im allgemeinen mehr als 500 g/m²d. Diese hohen Werte sind bei Rohwurstanwendungen, wie Salami, für das Abreifverhalten erforderlich. Allerdings bewirken sie im Fall von geräucherten Brühwurstsorten ein zu starkes Abtrocknen der Wurst beim Brühprozeß (Gefahr der Trockenrandbildung). Darüber hinaus kommt es in der Zweitverpackung zu einem unansehnlichen Aussaften der Wurst.

Nahrungsmittelhüllen auf Basis synthetischer Polymere können hingegen eine echte Alternative darstellen. Diese sind über ein kombiniertes Extrusions- und Blasformverfahren (gegebenenfalls biaxiale Verstreckung) sehr einfach und hygienisch einwandfrei herstellbar. Allerdings konnten sich reine Kunststoffhüllen aufgrund ihrer unnatürlichen, glatten und glänzenden Oberfläche nicht im Marktbereich für Kollagen- bzw. Naturdarm durchsetzen. Sie können zudem nur wenig Wasser speichern und zeigen nur eine geringe Durchlässigkeit für Wasserdampf und Rauch.

Es sind auch mit Naturstoffen modifizierte Kunststoffhüllen bekannt. So ist in der EP-B 0 711 324 eine verstärktes, biologisch abbaubares, nicht geschäumtes Polymer beschrieben, das thermoplastische Stärke, ein hydrophobes, biologisch abbaubares Polymer und eine Naturfaser wie Ramie oder Sisal enthält. Es wird als technischer Kunststoff zur Herstellung von Formkörpern eingesetzt. In der EP-A 0 596 437 sind Mischungen aus Stärke bzw. thermoplastischer Stärke z.B. mit aliphatischen Polyestern oder Polyvinylalkohol beschrieben, die sich durch thermoplastische Extrusion zu wasserbeständigen, biologisch abbaubaren Folien verarbeiten lassen.

In der EP-B 0 539 544 ist eine Polymermischung aus Stärke, einem Weichmacher und einem Polyolefin offenbart. Ein Material aus einem oder mehreren synthetischen Polymeren, z.B. einem Homo- oder Copolymer aus Hydroxycarbonsäuren, Polyurethanen, Polyamiden und Vinylalkohol-Copolymeren und Stärke wird in der WO 92/19680 beschrieben.

Bei den meisten Anwendungen dieser Art steht die biologische Abbaubarkeit im Vordergrund. Natürliches Aussehen und angenehme Haptik sind dabei zweitrangig, ebensowenig spielt die Wasserdampfdurchlässigkeit eine Rolle.

Eine rauchdurchlässige Nahrungsmittelhülle ist in der EP-A 920 808 beschrieben. Sie enthält als wesentlichen Bestandteil Cellulose-acetat-propionat, gegebenenfalls im Gemisch mit einem aliphatischen Polyamid oder Copolyamid, wie Polyamid 6, Polyamid 6/66, Polyamid 12 oder Polyamid 6/12. Sie kann darüber hinaus Weichmacher, wie Phthalsäureester, Glykol- oder Glycerin-Derivate, enthalten.

In der EP-A 962 145 ist eine biaxial orientierte, schlauchförmige Hülle offenbart, deren Schichten mindestens zwei Komponenten enthalten, wobei die erste Komponente ein Gemisch aus mindestens zwei Copolyamiden ist, während als zweite Komponente bevorzugt Siliciumdioxid zur Erhöhung der Oberflächenrauhigkeit eingesetzt wird.

In der US-A 4 303 711 ist eine schlauchförmige Nahrungsmittelhülle auf Basis von aliphatischen Polyamid mit einer glatten Oberfläche beschrieben.

In der WO 99/61524 sind Nahrungsmittelhüllen aus einem thermoplastischen Gemisch mit einer Polysaccharid-Komponente und einem Plastifizierungsmittel offenbart. Sie bestehen aus thermoplastischer Stärke oder thermoplastischen Stärkederivaten und einem thermoplastischem Polyesterurethan (TPU). Nahtlose schlauchförmige Hüllen aus diesem Material haben kleine Sigma-15-Werte von etwa 3 bis 4,5; d.h. sie sind leicht verformbar und zeigen folglich keine ausreichende Kaliberkonstanz. Die Hüllen haben eine milchige, matte Optik. Es fehlt ihnen jedoch die Rauhigkeit und die leicht inhomogene Struktur, die die natürliche Haptik eines Kollagen- oder Naturdarmes ausmachen. Zudem wirkt sich nachteilig aus, daß diese Hüllen eine unerwünscht starke Trübung zeigen, sobald sie mit einer Zweitverpackung aus Kunststofffolie umgeben und dadurch hoher Luftfeuchte ausgesetzt sind.

Aus der EP-B 0 935 423 ist eine Wursthülle auf Polyamidbasis bekannt, die Blockcopolymere mit harten aliphatischen Polyamidblöcken und weichen aliphatischen Polyetherblöcken enthält. Die Wasserdampfdurchlässigkeit solcher Hüllen beträgt etwa 75 g/m²d. Sie ist damit für geräucherte Brühwurstsorten im Prinzip geeignet. Von den Endverbrauchern wird jedoch deren sehr glänzende, glatte und künstlich wirkende Oberfläche kritisiert.

Die beiden zuletzt genannten Kunststoffhüllen haben sich als Alternative zu einem traditionellen Kollagen- oder Naturdarm nicht durchsetzen können. Erstere vor allem aufgrund ihrer mangelhaften Kaliberstabilität und ihrer Trübung in Zweitverpackung, letztere wegen ihrer glänzenden, unnatürlichen Optik.

Es bestand daher die Aufgabe, eine hygienisch einwandfreie, einfach herstellbare Nahrungsmittelhülle zur Verfügung zu stellen, die eine besonders matte, rauhe und natürliche Oberflächenstruktur zeigt. Außerdem soll die Wasserdampfdurchlässigkeit (WDD) definiert einstellbar sein und dabei weniger als 50 g/m²d betragen. Der Gewichtsverlust bei geräucherten Elrühwurstsorten soll gering, die Tendenz zur Trockenrandbildung minimal und das Aussaften in Zweitverpackung vernachlässigbar sein. Ferner soll sie ringelfähig sein, heiß anschneidbar und sie soll sich einwandfrei von dem Nahrungsmittel (in der Regel ein Wurstbrät) abschälen lassen.

Gelöst wurde die Aufgabe durch das Einarbeiten eines Kohlenhydrat-Füllstoffs, ggf. in Kombination mit einem anderen organischen und/oder einem anorganischen Füllstoff. Der Füllstoff verleiht der Hülle eine sehr natürliche seidenmatte Optik und Haptik. Die Oberfläche erhält eine leichte Rauhigkeit, die über die Art des Füllstoffes eingestellt werden kann. Über den Füllstoffanteil kann zudem die Ringeifähigkeit der Hülle beeinflußt werden. Ferner wirkt der Füllstoff als Verstärkungsmittel, wodurch die Kaliberstabilität des gefüllten Materials gegenüber dem ungefüllten deutlich erhöht ist. Schließlich bewirken die Füllstoffe eine erhöhte Rauchdurchlässigkeit, die sich ebenfalls durch Art und Anteil einstellen läßt. Einige Füllstoffe verbessern darüber hinaus das Wasserspeichervermögen der Hülle.

Gegenstand der vorliegenden Erfindung ist demgemäß eine ein- oder mehrschichtige Nahrungsmittelhülle aus einem thermoplastischen Gemisch mit mindestens einem aliphatischen Polyamid und/oder Copolyamid, dadurch gekennzeichnet, daß das Gemisch mindestens ein Kohlenhydrat als organischen Füllstoff umfaßt, wobei die Hülle eine maximale Rauhtiefe Rₘₐₓ, bestimmt gemäß DIN 4768, von 6 bis 60 µm, einen Mittenrauhwert Rₐ, bestimmt gemäß DIN 4762, von 1,2 bis 10 µm und eine Wasserdampfdurchlässigkeit bei einer mittleren Dicke von 100 µm, bestimmt gemäß DIN 53122, von weniger als 50 g/m²d aufweist. Bevorzugt weist sie eine WasserdamptdurchlässigKeit von 1 bis 49 g/m²·d auf. Sie ist damit speziell für Brühwurstsorten geeignet.

Im Fall der mehrschichtigen Hülle befindet sich das thermoplastische Gemisch in der Außenschicht.

Bevorzugte Polyamide und/oder Copolyamide (abgekürzt: (Co)Polyamide) sind PA 6 (Poly(ε-caprolactam) = Polyamid aus ε-Caprolactam bzw. 6-Amino-hexansäure), PA 6.6 (Polyhexamethylenadipamid = Polyamid aus Hexamethylendiamid und Adipinsäure), PA 6/6.6 (Copolyamid aus ε-Caprolactam, Hexamethylendiamin und Adipinsäure), PA 6/66.9 (Copolyamid aus ε-Caprolactam, Hexamethylendiamin, Adipinsäure und Azelainsäure), PA 6/66.12 (Copolyamid aus ε-Caprolactam, Hexamethylendiamin, Adipinsäure und Laurinlactam), PA 6.9 (Polyamid aus Hexamethylendiamin und Azelainsäure), PA 6.10 (Polyhexamethylensebacinamid = Polyamid aus Hexamethylendiamin und Sebacinsäure), PA 6.12 (Polyhexamethylendodecanamid = Copolyamid aus ε-Caprolactam und ω-Aminolaurinsäurelactam), PA 4.6 (Polytetramethylenadipinamid = Polyamid aus Tetramethylendiamin und Adipinsäure) oder PA 12 (Poly(ε-laurinlactam)). Das (Co)Polyamid bewirkt vor allem eine höhere Steifigkeit der Folie.

Gegebenenfalls enthältdas thermoplastische Gemisch zusätzlich noch mindestens ein Glykol- und/oder Polyglykol-Einheiten aufweisendes, aliphatisches und/oder teilaromatisches Copolyamid (abgekürzt: Polyether-block-amid). Das Polyether-block-amid ist vorzugsweise ein Blockcopolymer. Die Polyglykol-Blöcke weisen dabei in der Regel 5 bis 20 Glykol-Einheiten, bevorzugt etwa 7 bis 15, besonders bevorzugt etwa 10 Glykol-Einheiten auf. Unterder Bezeichnung Glykol sollen dabei mindestens zweiwertige, aliphatische oder cycloaliphatische Alkohole mit 2 bis 15 Kohlenstoffatomen verstanden werden. Die endständigen Hydroxygruppen der Polyglykol-Blöcke können dabei durch Aminogruppen ersetzt sein. Solche Blockcopolymere sind beispielsweise unter der Bezeichnung ^{®}Jeffamine erhältlich.

Der polyglykolische Anteil des aliphatischen oder teilaromatischen Copolyamids kann auch Estersegmente aufweisen. Diese bestehen aus Einheiten von mindestens einem bifunktionellen, aliphatischen Alkohol, bevorzugt Ethylenglykol oder 1,2-Propylenglykol (= Propan-1,2-diol), und Einheiten von mindestens einer zweiwertigen aliphatischen, cycloaliphatischen oder aromatischen Dicarbonsäure, bevorzugt Adipinsäure, Sebacinsäure oder Isophthalsäure.

Das glykol- oder polyglykolmodifizierte Copolyamid umfaßt daher in einer bevorzugten Ausführungsform
a) mindestens einen Amidanteil mit Einheiten
   a1) aus mindestens bifunktionellen aliphatischen und/oder cycloaliphatischen Aminen (speziell Hexamethylendiamin oder Isophorondiamin) und aus mindestens bifunktionellen aliphatischen und/oder cycloaliphatischen und/oder aromatischen Carbonsäuren (speziell Adipinsäure, Sebacinsäure, Cyclohexandicarbonsäure, Isophthalsäure oder Trimellitsäure), oder
   a2) aus aliphatischen Aminocarbonsäuren, insbesondere ω-Aminocarbonsäuren, oder deren Lactamen (speziell ε-Caprolactam oder ω-Laurinlactam) oder
   a3) Mischungen von a1) und a2) und
b) mindestens einen Glykol- oder Polyglykolanteil mit Einheiten
   b1) aus einem mindestens bifunktionellen, aliphatischen und/oder cycloaliphatischen Alkohol mit 2 bis 15 Kohlenstoffatomen, insbesondere 2 bis 6 Kohlenstoffatomen (speziell Ethylenglykol, Propan-1,2-diol, Propan-1,3-diol, Butan-1,4-diol oder Trimethylolpropan) oder
   b2) aus mindestens einem Oligo- oder Polyglykol aus einem der in b1) genannten Alkohole (speziell Diethylenglykol, Triethylenglykol, Polyethylenglykol oder Poly(1,2-propylenglykol)) oder
   b3) aus mindestens einem aliphatischen Oligo- oder Polyglykol der in b2) genannten Art, deren endständige Hydroxygruppen durch Aminogruppen ersetzt sind (Jeffamine) oder
   b4) aus einer Mischung von b1), b2) und/oder b3) oder
   b5) aus einem esterhaltigen polyglykolischen Anteil, gebildet aus mindestens bifunktionellen, aliphatischen Alkoholen (speziell Ethylenglykol oder 1,2-Propylenglykol) und mindestens zweiwertigen aliphatischen, cycloaliphatischen und/oder aromatischen Dicarbonsäuren (speziell Adipinsäure, Sebacinsäure oder Isophthalsäure) oder
   b6) aus einer Mischung von b1), b2) und/oder b5).

Vorzugsweise enthält das modifizierte Polyamid neben den genannten Bestandteilen keine weiteren.

In einer bevorzugten Ausführungsform besteht das thermoplastische Gemisch aus mindestens einem (Co)Polyamid und mindestens einem organischen und/oder anorganischen Füllstoff. Der Anteil an (Co)Polyamid beträgt in diesem Fall 50 bis 99 Gew..%, bevorzugt 60 bis 98 Gew,-%, besonders bevorzugt 65 bis 98 Gew.%, und der Gesamtanteil an anorganischem und/oder organischem Füllstoff 1 bis 50 Gew.-%, bevorzugt 2 bis 40 Gew.-%, besonders bevorzugt 2 bis 35 Gew.-%, jeweils bezogen auf das Gesamtgewicht des thermoplastischen Gemisches.

In einer anderen bevorzugten Ausführungsform besteht das thermoplastische Gemisch aus mindestens einem (Co)Polyamid und mindestens einem Polyether-block-amid und mindestens einem organischen und/oder anorganischen Füllstoff. In diesem Fall beträgt der Anteil an (Co)Polyamid 35 bis 98 Gew.-%, bevorzugt 45 bis 97 Gew.-%, besonders bevorzugt 55 bis 97 Gew.,% und der Anteil an Polyether-block-amid 1 bis 35 Gew,%, bevorzugt 2 bis 30 Gew.-%, besonders bevorzugt 3 bis 25 Gew.-% und der Gesamtanteil an anorganischem und/oder organischem Füllstoff beträgt 1 bis 50 Gew.-%, bevorzugt 1 bis 40 Gew.-%, besonders bevorzugt 2 bis 35 Gew.-%, jeweils bezogen auf das Gesamtgewicht des thermoplastischen Gemisches.

Das Kohlenhydrat ist vorzugsweise ein natürliches Polysaccharid und/oder ein Derivat davon, Verzweigte und vernetzte Polysaccharide und deren Derivate sind ebenfalls geeignet. Proteine sind nur bedingt einsetzbar, da sie bei den hohen Verarbeitungstemperaturen zu einem großen Anteil zersetzt werden.

Besonders geeignete Polysaccharide sind z.B. pflanzliche Pulver, Fasern, Fibride oder Pulpe aus Cellulose. Sie sollten Korngrößen bzw. Faserlängen von 5 bis 3000 µm, bevorzugt 10 bis 1000 µm, besonders bevorzugt 15 bis 500 µm, besitzen. Darunter fallen Pflartzenhaare bzw, Samenfasem wie Baumwolle, Kapok oderAkon, Bastfasern wie Flachs bzw. Leinen, Hanf, Jute, Sunn, Kenaf, Urena, Rosella oder Ramie, Hartfasern wie Sisal, Henequen, Manila, Fique, Phormium, Alfagras, Torf, Stroh oder Jucca, Fruchtfasern wie Kokos, Ananas, Apfel oder Orange, Weich- und Hartholzfasern wie Fichte, Kiefer oder Korkmehl, andere Pflanzenfasern, z. B. Tillandsia, sowie Fasern aus Weizen, Kartoffeln, Tomaten oder Karotten.

Einsetzbar ist auch die native Stärke, beispielsweise aus Kartoffeln, Maniok, Maranta (= Arrowroot), Batate, Weizen, Mais, Roggen, Reis, Gerste, Hirse, Hafer, Sorghum, Kastanien, Eicheln, Bohnen, Erbsen, Bananen, Palmmark (Sago). Maisstärke ist besonders bevorzugt. Das Verhältnis von Amylose zu Amylopektin in den verschiedenen Stärken kann dabei variieren. Das Molekulargewicht M_{w} beträgt zweckmäßig etwa 50.000 bis 10.000.000.

Stärkederivate sind beispielsweise gepfropfte native Stärken. Ptroptungsmittel sind insbesondere Maleinsäureanhydrid, Bernsteinsäureanhydrid oder ε-Caprolacton. Geeignet sind daneben Stärkeester, insbesondere Stärkexanthogenate, -acetate, -phosphate, -sulfate, -nitrate, -maleate, -propionate, -butyrate, -lauroate und -oleate. Ferner Stärkeether, wie Stärkemethylether, -ethylether, -propylether, -butylether, -alkenylether, -hydroxyethylether, -hydroxypropylether. Oxidierte Stärken wie Dialdehydstärke, Carboxystärke oder mit Persulfat abgebaute Stärke sind ebenfalls geeignet.

Daneben sind auch vernetzte Kohlenhydrate verwendbar. Diese sind beispielsweise vernetzt mit Harnstoffderivaten, Urotropin, Trioxan, Di- oder Polyepoxiden, Di- oder Polychlorhydrinen, Di- oder Polyisocyanaten, Kohlensäurederivaten, Diestern oder anorganischen Polysäuren, wie Phosphorsäure oder Borsäure.

Weiterhin eignen sich als Füllstoff auch Naturstoffe, wie Olivenkernmehl, Xanthan, Gummi arabicum, Gummi Gellan, Gummi Ghatti, Gummi Kraya, Traganthgummi, Emulsan, Rhamsan, Wellan, Schizophyllan, Polygalactorunate, Laminarin, Amylose, Amylopektin sowie Pektine. Einsetzbar sind auch Alginsäure, Alginate, Carrageenan, Furcellaran, Guargummi, Agar agar, Tamarindengummi, Araliagummi, Arabinogalactan, Pullulan, Johannesbrotgummi, Chitosan, Dextrine, 1,4-α-D-Polyglucan. Das Molekulargewicht M_{w} der genannten Kohlenhydrate liegt allgemein bei 500 bis 100.000.

Verwendbar sind auch synthetische Fasern oder Pulver (z.B. Polyethylen-, Polypropylen-, Polyamid-, Polyacrylonitril-, Polyester-Fasern). Besonders geeignet sind synthetische, hochtemperaturstabile Fasern oder Pulver auf Basis von Fluorpolymeren, Polysulfonen, Polyethersulfonen, Polyetherketonen, Polyphenylensulfiden, Polyaramiden, Polyimiden, aromatischen Polyestern, Polychinoxalinen, Polychinolinen, Polybenzimidazolen, flüssigkristallinen Polymeren und Leiterpolymeren sowie Kohlenstoff-Fasern. Deren Faserlänge bzw. Korngröße beträgt allgemein 5 bis 3.000 µm, bevorzugt 10 bis 1.000 µm, besonders bevorzugt 15 bis 500 µm.

Geeignete anorganische Füllstoffe sind insbesondere Fasern oder im wesentlichen kugelförmige Partikel aus Glas (z.B. Glasfasern, Glasfilamente, Glasstapelfasern), Steinwolle-Kurzfasern (z.B. Basaltwolle, Schlackenwolle oder Mineralwollfasern), Carbonate (z.B. Kreide, Kalksteinmehl, Calcit, gefälltes Calciumcarbonat, Magnesiumcarbonat, Dolomit oder Bariumcarbonat), Sulfate (z.B. Bariumsulfatoder Calciumsulfat), Silicate (z. B. Talk, Pyrophyllit, Chlorit, Hornblende, Glimmer, Kaolin, Wollastonit, Schiefermehl, gefällte Ca-, Al-, Ca-/Al-, Na-/Al-Silicate, Feldspäte, Mullit, Zeolithe, Kieselsäure, Quarz, Quarzgut, Cristobalit, Kieselgur, Neuburger Kieselerde, gefällte Kieselsäure, pyrogene Kieselsäure, Glasmehl, Bimsmehl, Perlit, (Mikro)glaskugeln (Vollglaskugeln), Aluminiumsilikathohlkugeln, Ca-Metasilicate) oder Oxide (z.B. Aluminiumhydroxid, Magnesiumhydroxid, Titandioxid). Die Faserlänge bzw. Korngröße der anorganischen Füllstoffe beträgt allgemein 0,1 bis 3.000 µm, bevorzugt 0,1 bis 500 µm, besonders bevorzugt 1 bis 250 µm.

In einer bevorzugten Ausführungsform besteht der anorganische Füllstoff aus Mikroglaskugeln mit einem mittleren Durchmesser von 1 bis 250 µm, bevorzugt 2 bis 150 µm. Diese setzen sich vorzugsweise zusammen aus 70 bis 73 Gew.-% SiO₂, 13 bis 15 Gew.-% Na₂O, 7 bis 11 Gew.-% CaO, 3 bis 5 Gew.-% MgO, 0,5 bis 2 Gew.-% Al₂O₃ und 0,20 bis 0,60 Gew.-% K₂O. Die Oberfläche der Mikroglaskugeln ist zweckmäßig modifiziert mit einem Haftvermittler, der die Haftung an umgebenden Polymeren verbessert. Verwendbar sind beispielsweise kommerziell erhältliche Mikroglaskugeln, die so modifiziert sind, daß sie gut haften an Acetalen, an Styrol/Acrylnitril-Copolymeren, Acrylnitril/ Butadien/Styrol(ABS)-Copolymeren, Cellulose, Polyestern (speziell Polybutylenterephthalat), Polyamiden, Polyolefinen (speziell Polyethylenen), Polycarbonaten, Polymethylen(meth)acrylaten, Polyphenylenoxiden, Polypropylenen, Polystyrolen, Polysulfonen oder an Polyvinylchloriden.

Die Rauhigkeit der erfindungsgemäßen Nahrungsmittellhülle laßt sich über den Anteil und die Korngröße der Füllstoffe einstellen. Sie weist bevorzugt eine maximale Rauhtiefe Rₘₐₓ (bestimmt gemäß DIN 4768; E 1989) von 3 bis 60 µm, besonders bevorzugt von 6 bis 45 µm, einen Mittenrauhwert Rₐ (bestimmt gemäß DIN 4762; E 1989) von 0,5 bis 10 µm, bevorzugt von 0,8 bis 7 µm, besonders bevorzugt von 1,2 bis 6,5 µm, und eine mittlere Rauhtiefe R_{z} (bestimmt gemäß DIN 4768; E 1989) von 1 bis 45 µm, bevorzugt von 2 bis 35 µm, besonders bevorzugt von 3 bis 32 µm, auf.

Eine Besonderheit bei Kollagenhüllen ist ihr gutes Wasserspeichervermögen. Dieser Effekt läßt sich bei der erfindungsgemäßen Hülle durch Füllstoffe nachahmen, die hoch quellfähig sind bzw. wie Superabsorber wirken. Dies vermindert bei Brühwurstsorten das Aussaften in einer Zweitverpackung. Geeignet sind insbesondere sulfat-, carboxylat- oder phosphatgruppenhaltige Füllstoffe bzw. solche mit quarternären Ammoniumgruppen. Ebenso sind hoch quellfähige nicht-ionische Füllstoffe geeignet. Die Füllstoffe können vernetzt, unvernetzt, verzweigt oder linear vorliegen. In Frage kommen z.B. natürliche, organische Verdickungsmittel wie Agar Agar, Alginate, Pektine, Carrageenane, Traganth, Gummi arabicum, Guarkernmehl, Johannisbrotkernmehl und Gelatine, daneben auch abgewandelte organische Naturstoffe wie (Natrium)Carboxymethylcellulose, Natriumcarboxymethyl-ethylcellulose, Methyl-hydroxyethyl-cellulose, Methyl-hydroxypropyl-cellulose, Hydroxyethylcellulose und Carboxymethylstärke. Einsetzbar sind ferner anorganische Verdickungsmittel (z.B. Kieselsäure oder Polykieselsäure), Tonmineralien, wie Montmorillonite oder Zeolithe. Als vollsynthetische Verdickungsmittel einsetzbar sind Vinylpolymere, Polycarbonsäuren, Polyether, Polyimine und Polyamide. Ferner Superabsorber auf Polyacrylat- bzw. Polymethacrylatbasis

Der Gesamtanteil an Füllstoff(en) beträgt allgemein 1 bis 50 Gew.-%, bevorzugt 2 bis 40 Gew.-%, besonders bevorzugt 2 bis 35 Gew.-%, jeweils bezogen auf das Gesamtgewicht des thermoplastischen Gemisches. Bei einem hohen Füllstoffanteil läßt sich die Hülle papierartig reißen und kann vom Wurstbrät abgeringelt werden.

Gegebenenfalls kann das thermoplastische Gemisch noch weitere synthetische Polymere enthalten. Das sind insbesondere lonomere, Polymere mit (Meth)acrylsäureesteroder Polymere mit Vinylester-Einheiten. Diese Polymere sind partiell unverträglich mit Polyamiden, so daß eine gemaserte, imhomogene Oberflächenstruktur entsteht. Das ist durchaus erwünscht, denn die erfindungsgemäße Hülle sieht dann einem Kollagen- bzw. Faserdarm noch ähnlicher. Die Hülle wird dadurch außerdem weicher und weniger spröde. Bei einem Füllstoffanteil von mehr als 5 Gew.-% kann die Hülle ansonsten in einigen Fällen spröde sein.

Das lonomer ist allgemein ein Copolymer mit einem großen Anteil an Einheiten von hydrophoben Monomeren und geringen Anteilen von Comonomeren mit ionischen Gruppen. Die ionischen Gruppen können dabei direkt an die Hauptkette des Copolymers gebunden sein. Sie können auch an Seitenketten davon gebunden sein. Bevorzugte lonomere sind Ethylen/(Meth)acrylsäure-Copolymere, in denen ein Teil der Carboxylgruppen als Natrium- oder Zink-carboxylat-Gruppen vorliegen kann.

Das (Meth)acrylsäureester-Polymer ist vorzugsweise ein Ethylen/Methylacrylat-, ein Ethylen/Ethylacrylat- oder ein Ethylen/Butylacrylat-Copolymer. Das Vinylester-Polymer ist beispielsweise ein Polyvinylacetat, ein Ethylen/Vinylacetat-Copolymer oder ein Copolymer mit Einheiten von Vinylacetat und von 2-Ethyl-hexylacrylat, Crotonsäure, Vinylchlorid, Vinyllaurat, Dibutylmaleat, Dioctylmaleat oder Maleinsäureanhydrid. Es kann auch ein Terpolymer mit Einheiten aus Vinylacetat, Butylacrylat und N-(2-Hydroxy-ethyl)acrylamid, ein Terpolymer mit Einheiten aus Vinylacetat, Ethylen und Vinylchlorid oder ein Terpolymer mit Einheiten von Vinylacetat, Ethylen und Acrylamid sein. Zu den Vinylacetat-Copolymeren gehören auch teilverseifte Polyvinylacetate, auch bezeichnet als Poly(vinylacetat-co-vinylalkohole).

Der Anteil an lonomer, (Meth)acrylsäureester-Polymeren und/oder Vinylester-Polymeren beträgt allgemein 1 bis 30 Gew.-%, bevorzugt 1,5 bis 25 Gew.-%, besonders bevorzugt 2 bis 17 Gew.-%.

Der Zusatz eines Weichmachers bzw. eines Plastifizierungsmittels ist zu empfehlen. Die Verarbeitung auf den Folienblasanlagen wird dadurch vereinfacht, da das Material weniger spröde ist. Außerdem wird durch den besseren Aufschluß der Füllstoffkomponente eine homogenere Folienstruktur erhalten, was für bestimmte Anwendungen erwünscht ist.

Bevorzugte Plastifizierungsmittel sind Dimethylsulfoxid (DMSO), Butan-1,3-diol, Glycerin, Wasser, Ethylenglykol, Butylenglykol, Diglycerid, Diglykolether, Formamid, N-Methylformamid, N,N-Dimethylformamid (DMF), N,N-Dimethylharnstoff, N,N-Dimethylacetamid, N-Methylacetamid, Polyalkylenoxid, Glycerinmono-, -di- oder -triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure oder Zitronensäurederivate oder Polyvinylalkohol. Art und Anteil an Plastifizierungsmittel(n) richten sich nach den jeweils ausgewählten Füllstoffen und lassen sich durch einfache Vorversuche optimieren.

Der Anteil an Weichmacher bzw. Plastifizierungsmittel beträgt bis zu 30 Gew.-%, bevorzugt 1 bis 25 Gew.-%, besonders bevorzugt 2 bis 20 Gew.-%, jeweils bezogen auf das Gesamtgewicht des thermoplastischen Gemisches.

Falls gewünscht, kann die erfindungsgemäße Hülle durch Farbstoffe und/oder Pigmente eingefärbtwerden. Beim Verstrecken können sich um die Pigmentpartikel herum Hohlräume (Vakuolen) bilden. Durch die Vakuolen wird die Rauchdurchlässigkeit der Folie weiter erhöht. Die Farbstoffe oder Pigmente werden zweckmäßig dem thermoplastischen Gemisch vor der Extrusion zugegeben. Außerdem können bei Bedarf Additive zugesetzt werden, die die Bräthaftung beeinflussen. Grundsätzlich geeignet sind stickstoffhaltige und carboxylgruppenhaltige Verbindungen. Eine bessere Bräthaftung kann auch durch physikalische Verfahren, wie Koronabehandlung, erzielt werden.

Die erfindungsgemäße Hülle kann auch mehrschichtig sein. Sie umfaßt dann allgemein 2 bis 5 Schichten. Die weiteren Schichten sind beispielsweise solche auf Basis von Polyolefinen und/oder Polyamiden. Die füllstoffhaltige Schicht, die der Hülle die gewünschte rauhe Oberflächenstruktur gibt, bildet dabei die äußere Schicht. Zwischen den einzelnen Schichten können sich noch zusätzlich dünne (etwa 1 bis 5 µm dicke) Schichten befinden, die Haftvermittler enthalten. Als Haftvermittler eignen sich insbesondere Polyolefine, die mit funktionellen Gruppen modifiziert sind (beispielsweise durch Pfropfen mit Maleinsäureanhydrid). Haftvermittler können ebenso gut auch Bestandteil der Schichten auf Basis von Polyolefinen oder Polyamiden sein. In einer bevorzugten Ausführungsform ist mindestens ein Haftvermittler in die Polyolefinschicht eingearbeitet. Die Gesamtdicke der mehrschichtige Hülle liegt allgemein in demselben Bereich in dem auch die Gesamtdicke der einschichtigen liegt.

Die erfindungsgemäße Hülle ist besonders geeignet für die Heißräucherung (mehr als 50°C), unter bestimmten Bedingungen auch für die Warmräucherung (25 bis 50 °C). Für die Kalträucherung (bis 25°C) ist sie allerdings weniger gut geeignet. Die Intensität des auf das Nahrungsmittel (das ist insbesondere Wurstbrät) übertragenen Raucharomas und der Rauchfarbe steigt mit zunehmender Temperatur des Rauchgases. Darüber hinaus besitzt der Rauch aufgrund seiner aldehydischen, phenolischen und säurehaltigen Bestandteile eine konservierende, antioxidative und verfestigende Wirkung.

Die erfindungsgemäße Hülle läßt sich hygienisch einwandfrei in gleichbleibender Qualität herstellen. Das Herstellverfahren ist wesentlich einfacher als der Kollagenprozeß. Schließlich ist die Hülle nach den bekannten Verfahren (Drucken, Kranzen, Raffen) konfektionierbar.

Hergestellt wird die erfindungsgemäße Nahrungsmittelhülle allgemein durch ein Schlauchblasverfahren oder durch biaxiales Streckorientieren. Bei dem Schlauchblasverfahren wird der extrudierte Schlauch durch Aufblasen in Umfangsrichtung (Querrichtung) und durch Abzugswalzen in Längsrichtung gereckt. Da die Verformung unmittelbar aus der Schmelze erfolgt, ist der Orientierungsgrad der Polymerketten gering. Beim biaxialen Streckorientieren wird zunächst durch Extrudieren ein Schlauch mit relativ hoher Wandstärke hergestellt. Dieser wird nur wenig oder gar nicht aufgeblasen. Anschließend wird der sogenannte Primärschlauch abgekühlt. Erst in einem weiteren Schritt wird der Primärschlauch auf die zur biaxialen Streckorientierung notwendige Temperatur aufgeheizt und dann durch einen von innen wirkenden Gasdruck und durch Abzugsrollen biaxial streckorientiert. Dadurch wird ein hoher Orientierungsgrad der Polymerketten erreicht, viel höher als bei einer Blasfolie.

Die erfindungsgemäße nahtlose, schlauchförmige Hülle weist vorzugsweise eine Dicke von 40 bis 200 µm auf, wenn sie nach einem Schlauchblasverfahren hergestellt ist, und eine Dicke von 25 bis 75 µm, wenn sie durch biaxiale Streckorientierung (Double-bubble-Verfahren) erhalten wurde. Nahtlose schlauchförmige Hüllen, die als künstliche Wursthüllen verwendet werden sollen, werden bevorzugt durch biaxiale Streckorientierung hergestellt. Nach der biaxialen Streckorientierung folgt zweckmäßigerweise noch eine teilweise oder vollständige Thermofixierung. Durch die Thermofixierung kann der Schrumpf der Hülle auf den gewünschten Wert eingestellt werden. Künstliche Wursthüllen haben allgemein einen Schrumpf von weniger als 20 % in Längs- und Querrichtung, wenn sie 1 min lang in Wasser von 90 °C gelegt wurden.

Die schlauchförmige Hülle kann dann noch konfektioniert werden zu einseitig abgebundenen Abschnitten. Sie kann auch abschnittsweise zu Raffraupen aufgestockt werden. Ferner kann sie zu einem sogenannten Kranzdarm gebogen werden. Dazu wird die Hülle einseitig mit Hitzestrahlung oder Heißluft beaufschlagt. Möglich sind auch spezielle Naturdarmformen, z. B. das Fettende.

Verfahren und Vorrichtungen zum Verkranzen von Polymerhüllen sind dem Fachmann geläufig.

Die nachfolgenden Beispiele wurden gemäß den im Folgenden beschriebenen Verfahren 1 oder 2 hergestellt und illustrieren die Erfindung. Prozente sind Gewichtsprozente, soweit nicht anders angegeben oder aus dem Zusammenhang ersichtlich. Die in den Beispielen genannten Komponenten wurden jeweils in einem Zweischneckenextruder vermischt und thermoplastifiziert.

### Verfahren 1:

Zunächst wurde der organische Füllstoff in den Extruder eingefüllt und mit einem Plastifizierungsmittel versetzt. Dabei wurde die Temperatur im Extruder über mehrere Zonen von etwa 90 bis etwa 180 °C erhöht. Anschließend wurden das (Co)Polyamid oderdas Gemisch aus (Co)Polyamid und Polyether-block-amid sowie gegebenenfalls weitere Additive in den Extruder eingespeist und mit den übrigen Bestandteilen bei Temperaturen zwischen 200 und 300 C (je nach Schmelzpunkt des Polyamides) vermischt und die daraus gebildete thermoplastische Schmelze extrudiert. Das Extrudat wurde schließlich zu einem Granulat zerkleinert.

### Verfahren 2:

Hierbei wurde(n) zuerst das (Co-)Polyamid oder das Gemisch aus (Co)Polyamid und Polyether-block-amid und gegebenenfalls weitere Additive in den Extruder eingespeist und bei Temperaturen zwischen 200 und 300 C (je nach Schmelzpunkt des Polyamids) vermischt. Danach wurde der organische bzw. anorganische Füllstoff hinzugegeben. Ein Plastifizierungsmittel ist hierbei nicht zwingend erforderlich. Das thermoplastische Gemisch wurde schließlich zu einem Granulat zerkleinert.

Das Granulat wurde dann durch ein Schlauchblasverfahren bzw. durch biaxiales Streckorientieren zu einer Schlauchfolie verarbeitet. Mehrschichtige Hüllen wurden durch Coextrusion mit Hilfe einer Mehrschichtdüse hergestellt, wobei die füllstoffhaltige Schicht die Außenschicht bildete.

In den Beispielen wurden verwendet:
- Ethylen/Methacrylsäure-Copolymer, teilneutralisiert mit Zinkionen (®Surlyn 9020 und ®Surlyn 1650 der Dupont)
- Ethylen/Methylacrylat-Copolymer (mit 24 % Methylacrylat) (®Elvaloy 1224AC der DuPont)
- Ethylen/Acrylsäure-Copolymer (als freie Säure) (®Nucrel 31001 der Dupont)
- Polyamid 6/Polyethylenglykol-Blockcopolymer (®Pebax MH 1657 SA der Elf Atochem S.A.)
- Polyamid 12/Polyethylenglykol-Blockcopolymer (®Pebax MV 1074 SA der Elf Atochem S.A.)
- Polyamid 6/6.6 (®Ultramid C4 der BASF Aktiengesellschaft)
- Polyamid 6 (®Grilon F40 der Ems Chemie AG)
- Polyamid 6.6 (®Ultramid A5 der BASF Aktiengesellschaft)
- Polyamid 12 (®Grilamid L25 der Ems Chemie AG)

Zusammensetzung und Eigenschaften der schlauchförmigen Hüllen gemäß den Beispielen 1 bis 14 sind in den Tabellen 2 und 3 zusammengestellt.

**Tabelle 1**

| **1** | | **2** | **3** | **4** |
|---|---|---|---|---|
| **Thermoplastisches Gemisch** | | **Füllstoff** | **Plastifizierungsmittel** | **Weitere Additive** |
| a | (Co)polyamid | Polysaccharid oder anorganischer Füllstoff | Weichmacher | Ionomere und/oder (Meth)acrylsaureester-Polymere acrylsäureester-Polymere und/oder Vinylester-Polymere |
| | für Stabilität und Bräthaftung | | | |
| b | Blend aus (Co)polyamid und glykol- oder polyglykolmodifiziertem Polyamid | natürliche Haptik / Optik | Geschmeidigkeit | natürliche Maserung, |
| | | | | |
| | | Ringelfähigkeit | Aufschluß des Naturstoffes | inhomogene Oberflächenstruktur |
| | für Stabilität, Bräthaftung Wasserdampf- und verbesserte Rauchdurchlässigkeit | Wasserdampf- und Rauchdurchlässigkeit | | Verminderung der Sprödigkeit |
| | | | | |
| | | Regulierung des Wasserspeichervermögens | | |

| | | | | |
|---|---|---|---|---|
| Folgende Rohstoffkombinationen sind denkbar: [1](a) + [2] // [1](b) + [2] // [1](a) + [2] + [3] // [1](b)+ [2] + [3] [1](a) + [2] + [4] // [1](b) + [2] + [4] // [1](a) + [2] + [3] + [4] // [1](b) + [2] + [3] + [4] | | | | |

**Tabelle 2**

| Beispiel | Thermoplastische Komponente | | Füllstoff | | Plastifizierungsmittel | | Verfahren |
|---|---|---|---|---|---|---|---|
| V1 | 87,0 Gew.-% | Ultramid A5 | 4 Gew.-% | Quarzmehl Mikroglaskugeln | ----- | ----- | 2 |
| | | | 9 Gew.-% | | | | |
| V2 | 97,0 Gew.-% | Ultramid A5 | 3 Gew.-% | Calciumcarbonat | ----- | ----- | 2 |
| 3 | 58,5 Gew.-% | Ultramid C4 | 4 Gew.-% | Cellulosepulver | 6 Gew.-% | Glycerin | 1 |
| | 18,0 Gew.-% | Grilon CF6S | | | | | |
| | 13,5 Gew.-% | Pebax MH 1657 | | | | | |
| 4 | 96,0 Gew.-% | Ultramid C4 | 4 Gew.-% | Cellulosepulver | ----- | ----- | 2 |
| 5 | 62,5 Gew.-% | Ultramid C4 | 4 Gew.-% | Cellulosepulver | ----- | ----- | 2 |
| | 19,0 Gew.-% | Grilon CF6S | | | | | |
| | 14,5 Gew.-% | Pebax MH 1657 | | | | | |
| 6 | 70,0 Gew.-% | Grilamid L25 | 5 Gew.-% | Guarkernmehl | ----- | ----- | 2 |
| | 25,0 Gew.-% | Pebax MV 1074 | | | | | |
| 7 | 80,0 Gew.-% | Grilon F40 | 10 Gew.-% | Maisstärke | 3 Gew.-% | Glycerin | 1 |
| | 7,0 Gew.-% | Pebax MH 1657 | | | | | |
| V8 | 61 Gew.-% | Ultramid A5 | 9 Gew.-% 4 Gew.-% | Mikroglasskugeln Quarzmehl | ---- | ----- | 2 |
| | 15 Gew.-% | Nucrel 31001 | | | | | |
| | 11 Gew.-% | Grilon F 40 | | | | | |
| V9 | 71 Gew.-% | Ultramid A5 | 9 Gew.-% 4 Gew.-% | Mikroglasskugeln Quarzmehl | ---- | ----- | 2 |
| | 5 Gew.-% | Elvaloy AC 1224 | | | | | |
| | 11 GeW.-% | Grilon F 40 | | | | | |
| V10 | 71 Gew.-% | Ultramid A5 | 9 GeW.-% 4 Gew.-% | Mikroglaskugen Quarzmehl | ----- | ----- | 2 |
| | 5 Gew.-% | Surlyn 9020 | | | | | |
| | 11 Gew.-% | GrilonF 40 | | | | | |
| V11 | 66 Gew.-% | Ultramid A5 | 9 Gew.-% 4 Gew.-% | Mikroglaskugeln Quarzmehl | ----- | ----- | 2 |
| | 10 Gew.-% | Surlyn 9020 | | | | | |
| | 11 Gew.-% | Grilon F 40 | | | | | |
| 12 | 67 Gew.-% | Ultramid C4 | 4 Gew.-% | Cellulosepulver | 4 Gew.-% | Glycerin | 1 |
| | 10 Gew.-% | Nucrel 31001 | | | | | |
| | 15 Gew.-% | Pebax MH 1657 | | | | | |
| 13 | 72 Gew.-% | Ultramid C4 | 4 Gew.-% | Cellulosepulver | 4 Gew.-% | Glycerin | 1 |
| | 10 Gew.-% | Surlyn 1650 | | | | | |
| | 10 Gew.-% | Pebax MH 1657 | | | | | |
| 14 | 69 Gew.-% | Ultramid C4 | 10 Gew.-% | Maisstärke | 6 Gew.-% | Glycerin | 1 |
| | 5 Gew.-% | Surlyn 1650 | | | | | |
| | 10 Gew.-% | Pebax MH 1657 | | | | | |

**Tabelle 3**

| **Beispiel** | **WDD)¹** | **σ₁₅ - Wert)² längs / quer** | **Reißfestigkeit)² längs / quer** | **Reiß- dehnung)² längs / quer** | **Rauhigkeit Rₐ/R_{z}/Rₘₐₓ** | **Glanzwert 20°/60°/85°** | **Foliendicke** |
|---|---|---|---|---|---|---|---|
| Nr. | [g/m²·d] | [N/mm²] | [N/mm²] | [%] | [µm] | | [µm] |
| V1 | 10 | 19/19 | 24/23 | 85/71 | 2/8,4/16,9 | 6,3/29,1/22,2 | 89 |
| V2 | 8 | 41/30 | 37/30 | 109/99 | 1,2/5.9/8,3 | 7.4/39,4/26.1 | 90 |
| 3 | 49 | 16/15 | 54/53 | 451/489 | 2,0/10.5/14 | 0.5/6,0/4,2 | 80 |
| 4 | 40 | 20/18 | 60 / 52 | 490/460 | 1,9/10.1/13 | 0,6/6,1/4,5 | 70 |
| 5 | 48 | 16/15 | 54/49 | 434/440 | 2,1/11/15 | 0.5/6,3/4.3 | 64 |
| 6 | 16 | 18/17 | 50/49 | 401/395 | 1,8/9,7/12,5 | 0.7/7,0/5,2 | 75 |
| 7 | 30 | 20/19 | 52/50 | 397/396 | 0,7/3,0/4,8 | 4,5/23,1/16,2 | 52 |
| V8 | 11 | 16/16 | 25/20 | 150/100 | 2,9/14,8/23,9 | 5,8/25,1/19,2 | 90 |
| V9 | 11 | 19/17 | 26/23 | 140/90 | 1,9/10,7/13,4 | 6,4/30,0/22,1 | 90 |
| V10 | 11 | 16/15 | 25/22 | 120 /80 | 2,1/12,3/19,8 | 6,5/27,0/20,2 | 90 |
| V11 | 10 | 18/17 | 26/20 | 120/60 | 2,2/9.3/14,0 | 6,0/25,9/20,1 | 96 |
| 12 | 38 | 15/14 | 50/48 | 425/410 | 2,0/9,8/12,7 | 0,6/6,5/4,4 | 70 |
| 13 | 30 | 16/16 | 52/49 | 401/392 | 1,8/9,7/12,5 | 0,5/6,2/4,1 | 70 |
| 14 | 48 | :19/19 | 49/47 | 380/370 | 0.8/3,1/5,0 | 4,2/22,1/15,4 | 60 |

| | | | | | | | |
|---|---|---|---|---|---|---|---|
| V = Vergleichsbeispiel )¹ WDD = Wasserdampfdurchlässigkeit. Die Hülle wurde dabei einseitig mit Luft einer relativen Feuchte von 85 % bei 23 °C beaufschlagt; die Wasserdampfdurchlässigkeit wurde gemäß DIN 53 122 bestimmt. )² Die Vergleichsbeispiele 1, 2 und 8 bis 11 wurden gemäß DIN 53 455 an nassen Proben von 15 mm Breite bei einer Einspannlänge von 50 mm bestimmt, Beispiele 3 bis 7 und 12 bis 14 an trockenen Proben | | | | | | | |

### Vergleichsbeispiel 15 (WO 99/61524)

Wie in den vorangegangenen Beispielen beschrieben, wurde eine Schlauchfolie hergestellt aus einem thermoplastischen Gemisch gemäß der WO 99/61524.
Konkret enthielt das Gemisch.
42 Gew.-% thermoplastisches Polyesterurethan
35 Gew.-% Maisstärke
23 Gew.-% Glycerin

Die fertige Folie hatte eine Dicke von 120 µm. Ihr σ₁₅-Wert betrug 4,2 N/mm² und ihre Wasserdampfdurchlässigkeit 200 g/m² d. Die Rauhigkeiten Rₐ / R_{z} /Rₘₐₓ betrugen 0,3 / 1,8 / 2,4 µm.

Diese Folie wies trotz höherer Dicke eine geringere mechanische Stabilität (erkennbar am sigma-15-Wert) auf als die erfindungsgemäßen. Zudem war die Rauhigkeit der Hülle deutlich geringer.

### Vergleichsbeispiel 16 (EP-A 935 423)

Wie vorstehend beschrieben, wurde eine Schlauchfolie aus einem thermoplastischen Gemisch der folgenden Zusammensetzung hergestellt:
38 Gew.-% Grilon F40
27 Gew.-% Ultramid C4
35 Gew.-% Grilon FE 7012

Die fertige Folie hatte eine Dicke von 25 µm und eine Wasserdampfdurchlässigkeit von 75 g / m² d_{:} Die Rauhigkeiten Rₐ / R_{z} / Rₘₐₓ betrugen 0,5 / 3,0 / 3,7 und der Glanzwert bei 20° / 60° / 85° lautete 13,5 / 82,1 / 87,6.

Die erfindungsgemäßen Folien besaßen dagegen eine deutlich niedrigere Wasserdampfdurchlässigkeit, einen um einige Größenordnungen geringeren Glanz und eine natürlichere Rauhigkeit.

## Patentansprüche

1. Ein- oder mehrschichtige Nahrungsmittelhülle aus einem thermoplastischen Gemisch mit mindestens einem aliphatischen Polyamid und/oder Copolyamid, **dadurch gekennzeichnet, daß** das Gemisch mindestens ein Kohlenhydrat als organischen Füllstoff umfaßt, und die Hülle eine maximale Rauhtiefe Rₘₐₓ, bestimmt gemäß DIN 4768, von 6 bis 60 µm, einen Mittenrauhwert Rₐ, bestimmt gemäß DIN 4762, von 1,2 bis 10 µm und eine Wasserdampfdurchlässigkeit bei einer mittleren Dicke von 100 µm, bestimmt gemäß DIN 53122, von weniger als 50 g/m²d aufweist.

2. Nahrungsmittelhülle gemäß Anspruch 1, **dadurch gekennzeichnet, daß** sie eine Wasserdampfdurchlässigkeit, bestimmt gemäß DIN 53 122, von 1 bis 49 g/m²·d aufweist.

3. Nahrungsmittelhülle gemäß Anspruch 1 oder 2, **dadurch gekennzeichnet, daß** das (Co)polyamid PA 4.6, PA 6, PA 6.6, PA 6/6.6, PA 6.9, PA 6.10, PA 6.12, PA 6/66.9, PA 6/66.12 oder PA 12 ist.

4. Nahrungsmittelhülle gemäß einem oder mehreren der Ansprüche 1 bis 3, **dadurch gekennzeichnet, daß** das thermoplastische Gemisch zusätzlich mindestens ein Glykol- und/oder Polyglykol-Einheiten aufweisendes aliphatisches und/oder teilaromatisches Copolyamid enthält.

5. Nahrungsmittelhülle gemäß Anspruch 4, **dadurch gekennzeichnet, daß** das Glykol- und/oder Polyglykol-Einheiten aufweisende aliphatische und/oder teilaromatische Copolyamid
a) mindestens einen Amidanteil mit Einheiten
a1) aus mindestens bifunktionellen aliphatischen und/oder cycloaliphatischen Aminen und aus mindestens bifunktionellen aliphatischen und/oder cycloaliphatischen und/oder aromatischen Carbonsäuren, oder
a2) aus aliphatischen Aminocarbonsäuren oder deren Lactamen oder
a3) Mischungen von a1) und a2) und
b) mindestens einen Glykol- oder Polyglykolanteil mit Einheiten
b1) aus einem mindestens bifunktionellen, aliphatischen und/oder cycloaliphatischen Alkohol mit 2 bis 15 Kohlenstoffatomen, insbesondere 2 bis 6 Kohlenstoffatomen oder
b2) aus mindestens einem Oligo- oder Polyglykol aus einem der in b1) genannten Alkohole oder
b3) aus mindestens einem aliphatischen Oligo- oder Polyglykol der in b2) genannten Art, deren endständige Hydroxygruppen durch Aminogruppen ersetzt sind, oder
b4) aus einer Mischung von b1), b2) und/oder b3) oder
b5) aus einem esterhaltigen polyglykolischen Anteil, gebildet aus mindestens bifunktionellen, aliphatischen Alkoholen und mindestens zweiwertigen aliphatischen, cycloaliphatischen und/oder aromatischen Dicarbonsäuren oder
b6) aus einer Mischung von b1), b2) und/oder b5)
aufweist.

6. Nahrungsmittelhülle gemäß einem oder mehreren der Ansprüche 1 bis 5, **dadurch gekennzeichnet, daß** der Anteil an (Co)Polyamid 50 bis 99 Gew.-%, bevorzugt 60 bis 98 Gew.-%, besonders bevorzugt 65 bis 98 Gew.-%, und der Gesamtanteil an anorganischem und/oder organischem Füllstoff 1 bis 50 Gew.-%, bevorzugt 2 bis 40 Gew.-%, besonders bevorzugt 2 bis 35 Gew.- %, jeweils bezogen auf das Gesamtgewicht des thermoplastischen Gemisches, enthält.

7. Nahrungsmittelhülle gemäß Anspruch 4, **dadurch gekennzeichnet, daß** der Anteil an (Co)Polyamid 35 bis 98 Gew.-%, bevorzugt 45 bis 97 Gew.-%, besonders bevorzugt 55 bis 97 Gew.-%, der Anteil an Polyether-block-amid 1 bis 35 Gew.-%, bevorzugt 2 bis 30 Gew.-%, besonders bevorzugt 3 bis 25 Gew.-%; und der Anteil an Füllstoff 1 bis 50 Gew.-%, bevorzugt 1 bis 40 Gew.-%, besonders bevorzugt 2 bis 35 Gew.-%, beträgt, jeweils bezogen auf das Gesamtgewicht des thermoplastischen Gemisches.

8. Nahrungsmittelhülle gemäß einem oder mehreren der Ansprüche 1 bis 7, **dadurch gekennzeichnet, daß** das Kohlenhydrat, ein natürliches Polysaccharid und/oder ein Derivat davon oder ein verzweigtes oder vernetztes Polysaccharid und/oder ein Derivat davon ist.

9. Nahrungsmittelhülle gemäß einem oder mehreren der Ansprüche 1 bis 8, **dadurch gekennzeichnet, daß** das Gemisch einen weiteren organischen Füllstoff umfaßt, bevorzugt synthetische Fasern oder ein synthetisches Pulver, besonders bevorzugt eine Faser oder ein Pulver auf Basis von Fluorpolymeren, Polysulfonen, Polyethersulfonen, Polyetherketonen, Polyphenylensulfiden, Polyaramiden, Polyimiden, aromatischen Polyestern, Polychinoxalinen, Polychinolinen, Polybenzimidazolen, flüssigkristallinen Polymeren oder Leiterpolymeren, ist, wobei deren Faserlänge oder Korngröße allgemein 5 bis 3.000 µm, bevorzugt 10 bis 1.000 µm, besonders bevorzugt 15 bis 500 µm beträgt.

10. Nahrungsmittelhülle gemäß einem oder mehreren der Ansprüche 1 bis 9, **dadurch gekennzeichnet, daß** der Füllstoff hoch quellfähig ist, wobei eine sulfat-, carboxylat- oder phosphatgruppenhaltige Substanz, eine Substanz enthaltend quarternäre Ammoniumsalze, ein organisches Verdickungsmittel, ein abgewandelter organischer Naturstoff, ein anorganisches Verdickungsmittel, ein vollsynthetisches Verdickungsmittel oder ein Superabsorber auf Polyacrylat- oder Polymethacrylatbasis bevorzugt sind.

11. Nahrungsmittelhülle gemäß einem oder mehreren der Ansprüche 1 bis 10, **dadurch gekennzeichnet, daß** das Gemisch mindestens einen anorganischen Füllstoff umfaßt, bevorzugt Fasern und/oder Kugeln, besonders bevorzugt Glasfilamente, Glasstapelfasern, Mikroglaskugeln, Mineralwollfasern, Steinwoll-Kurzfasern, Kohlenstofffasern, Zeolithe, Quarz, Aluminiumsilikathohlkugeln, Siliciumdioxid, Kieselsäuren, Sulfaten, wie Bariumsulfat oder Calciumsulfat, Carbonaten, wie Calciumcarbonat und Magnesiumcarbonat, Aluminiumhydroxid, Oxiden, wieTitandioxid, Talk, Ton und/oder Glimmer.

12. Nahrungsmittelhülle gemäß Anspruch 11, **dadurch gekennzeichnet, daß** die Faserlänge oder Korngröße des anorganischen Füllstoffs 0,1 bis 3.000 µm, bevorzugt 0,1 bis 500, besonders bevorzugt 1 bis 250 µm, beträgt.

13. Nahrungsmittelhülle gemäß Anspruch 11, **dadurch gekennzeichnet, daß** die Mikroglaskugeln eine mittlere Korngröße von 1 bis 250 µm, bevorzugt 2 bis 150 µm, aufweisen, wobei diese bevorzugt im Mittel aus 70 bis 73 Gew.-% SiO₂, 13 bis 15 Gew.-% Na₂O, 7 bis 11 Gew.-% CaO, 3 bis 5 Gew.-% MgO, 0,5 bis 2,0 Gew.-% Al₂O₃ und 0,20 bis 0,60 K₂O bestehen.

14. Nahrungsmittelhülle gemäß Anspruch 13, **dadurch gekennzeichnet, daß** die Oberfläche der Mikroglaskugeln modifiziert ist mit einem Haftvermittler, der die Haftung an umgebenden Polymeren verbessert.

15. Nahrungsmittelhülle gemäß einem oder mehreren der Ansprüche 1 bis 14, **dadurch gekennzeichnet, daß** das thermoplastische Gemisch zusätzlich mindestens ein Ionomer, ein (Meth)acrylsäureester-Polymer und/oder ein Vinylester-Polymer enthält.

16. Nahrungsmittelhülle gemäß Anspruch 15, **dadurch gekennzeichnet, daß** das Ionomer ein Ethylenl(Meth)acrylsäure-Coyolymer ist, in dem ein Teil der Carboxylgruppen gegebenenfalls als Zink- oder Natriumcarboxylat-Gruppen vorliegt.

17. Nahrungsmittelhülle gemäß Anspruch 15, **dadurch gekennzeichnet, daß** das (Meth)acrylsäureester-Copolymer ein EthyienlMethylacrylat-, Ethylen/Ethylacrylat- und/oder ein Ethylen/Butylacrylat-Copolymer ist.

18. Nahrungsmittelhülle gemäß Anspruch 15, **dadurch gekennzeichnet, daß** das Vinylester-Polymer ein Polyvinylacetat, ein Ethylen/Vinylacetat-Copolymer, ein Copolymer mit Einheiten von Vinylacetat und von 2-Ethyl-hexylacrylat, Crotonsäure, Vinylchlorid, Vinyllaurat, Dibutylmaleat, Dioctylmaleat oder Maleinsäureanhydrid, ein Terpolymer mit Einheiten aus Vinylacetat, Butylacrylat und N-(2-Hydroxy-ethyl)acrylamid, ein Terpolymer mit Einheiten aus Vinylacetat, Ethylen und Vinylchlorid oder ein Terpolymer mit Einheiten von Vinylacetat, Ethylen und Acrylamid ist.

19. Nahrungsmittelhülle gemäß den Ansprüchen 14 bis 18, **dadurch gekennzeichnet, daß** der Anteil an lonomer, (Meth)acrylsäureester-Polymer und/oder Vinylester-Polymer 1 bis 30 Gew.-%, bevorzugt 1,5 bis 25 Gew.-%, besonders bevorzugt 2 bis 17 Gew.-%, beträgt, jeweils bezogen auf das Gesamtgewicht des thermoplastischen Gemisches.

20. Nahrungsmittelhülle gemäß einem oder mehreren der Ansprüche 1 bis 19, **dadurch gekennzeichnet, daß** sie zusätzlich ein Plastifizierungsmittel, bevorzugt Dimethylsulfoxid, Butan-1,3-diol, Glycerin, Wasser, Ethylenglykol, Butylenglykol, Diglycerid, Diglykolether, Formamid, N-Methyl-formamid, N,N-Dimethylformamid, N,N-Dimethylharnstoff, N,N-Dimethylacetamid, N-Methylacetamid, Polyalkylenoxid, Glycerinmono-, di-oder-triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure, Zitronensäurederivate oder Polyvinylalkohol, enthält, wobei der Anteil an Plastifizierungsmittel bis zu 30 Gew.-%, bevorzugt 1 bis 25 Gew. -%, besonders bevorzugt 2 bis 20 Gew.-%, jeweils bezogen auf das Gesamtgewicht des thermoplastischen Gemisches, beträgt.

21. Verfahren zur Herstellung einer Nahrungsmittelhülle gemäß einem oder mehreren der Ansprüche 1 bis 20, **dadurch gekennzeichnet, daß** das thermoplastische Gemisch mit mindestens einem aliphatischen Polyamid und/oder Copolyamid und mindestens einem Kohlenhydrat als organischen Füllstoff extrudiert oder coextrudiert und der dabei entstehende Schlauch blasgeformt oder biaxial streckorientiert wird.

22. Verfahren gemäß Anspruch 21, **dadurch gekennzeichnet, daß** der Schlauch - zu einseitig abgebundenen Abschnitten oder zu einer Raffraupe konfektioniert wird.

23. Verfahren gemäß Anspruch 21, **dadurch gekennzeichnet, daß** der Schlauch zu einer naturdarmähnlichen Form, insbesondere zum Kranzdarm oder Fettende, weiterverarbeitet wird.

24. Verwendung der Nahrungsmittelhülle gemäß einem oder mehreren, der . Ansprüche 1 bis 20 als künstliche Wursthülle, bevorzugt für Brühwurst.

## Claims

1. A single-layer or multilayer food casing made of a thermoplastic mixture having at least one aliphatic polyamide and/or copolyamide, wherein the_ mixture comprises at least one carbohydrate as organic filler, the casing having a maximum surface roughness Rₘₐₓ, determined in accordance with DIN 4768, of 6 to 60 µm, a mean roughness Rₐ determined in accordance with DIN 4762, of 1.2 to 10 µm, and a water vapor permeability at a mean thickness of 100 µm, determined as specified in DIN 53122, of less than 50 g/m²d.

2. The food casing as claimed in claim 1, wherein it has a water vapor permeability, determined as specified in DIN 53122, of 1 to 49 g/m²d.

3. The food casing as claimed in claim 1 or 2, wherein the (co)polyamide is polyamide 4.6, polyamide 6, polyamide 6.6, polyamide 6/6.6, polyamide 6.9, polyamide 6.10, polyamide 6.12, polyamide 6/66.9, polyamide 6/66.12 or polyamide 12.

4. The food casing as claimed in one or more of claims 1 to 3, wherein the thermoplastic mixture additionally comprises at least one aliphatic and/or partly aromatic copolyamide having glycol units and/or polyglycol units.

5. The food casing as claimed in claim 4, wherein the aliphatic and/or partly aromatic copolyamide having glycol and/or polyglycol units has
a) at least one amide part having units
a1) of at least bifunctional aliphatic and/or cycloaliphatic amines and of at least bifunctional aliphatic and/or cycloaliphatic and/or aromatic carboxylic acids, or
a2) of aliphatic aminocarboxylic acids or lactams thereof or
a3) mixtures of a1) and a2) and
b) at least one glycol or polyglycol part containing units
b1) of an at least bifunctional aliphatic and/or cycloaliphatic alcohol having from 2 to 15 carbon atoms, in particular from 2 to 6 carbon atoms, or
b2) of at least one oligoglycol or polyglycol of one of the alcohols specified in b1) or
b3) of at least one aliphatic oligoglycol or polyglycol of the type specified in b2), the terminal hydroxyl groups of which are replaced by amino groups or
b4) of a mixture of b1), b2) and/or b3) or
b5) of an ester-containing polyglycol part formed from at least bifunctional aliphatic alcohols and at least divalent aliphatic, cycloaliphatic and/or aromatic dicarboxylic acids or
b6) of a mixture of b1), b2) and/or b5).

6. The food casing as claimed in one or more of claims 1 to 5, wherein the amount of (co)polyamide is 50 to 99 % by weight, preferably 60 to 98 % by weight, particularly preferably 65 to 98 % by weight, and the total amount of inorganic and/or organic filler is 1 to 50 % by weight, preferably 2 to 40 % by weight, particularly preferably 2 to 35 % by weight, in each case based on the total weight of the thermoplastic mixture.

7. The food casing as claimed in claim 4, wherein the amount of (co)polyamide is 35 to 98 % by weight, preferably 45 to 97 % by weight, particularly preferably 55 to 97 % by weight, the amount of polyether block amide is 1 to 35 % by weight, preferably 2 to 30 % by weight, particularly preferably 3 to 25 % by weight, and the amount of filler is 1 to 50 % by weight, preferably 1 to 40 % by weight, particularly preferably 2 to 35 % by weight, in each case based on the total weight of the thermoplastic mixture.

8. The food casing as claimed in one or more of claims 1 to 7, wherein the carbohydrate is a natural polysaccharide and/or a derivative thereof, a branched or crosslinked polysaccharide and/or a derivative thereof.

9. The food casing as claimed in one or more of claims 1 to 8, wherein the mixture comprises a further organic filler, preferably synthetic fibers or an synthetic powder, preferably a fiber or a powder based on fluoropolymers, polysulfones, polyether sulfones, polyether ketones, polyphenylene sulfides, polyaramids, polyimides, aromatic polyesters, polyquinoxalines, polyquinolines, polybenzimidazoles, liquid-crystal polymers or conducting polymers, their fiber length or particle size being generally 5 to 3000 µm, preferably 10 to 1000 µm, particularly preferably 15 to 500 µm.

10. The food casing as claimed in one or more of claims 1 to 9, wherein the filler is highly swellable, preference being given to a sulfate-, carboxylate- or phosphate-containing substance, a substance containing quaternary ammonium salts, an organic thickener, a modified organic natural substance, an inorganic thickener, a fully synthetic thickener or a superabsorbent based on polyacrylate or polymethacrylate.

11. The food casing as claimed in one or more of claims 1 to 10, wherein the mixture comprises at least one inorganic filler, preferably fibers and/or spheres, particularly preferably glass filaments, glass staple fibers, glass microbeads, mineral wool fibers, short mineral wool fibers, carbon fibers, zeolites, quartz, aluminosilicate hollow beads, silicon dioxide, silicic acids, sulfates, preferably barium sulfate or calcium sulfate, carbonates, preferably calcium carbonate and magnesium carbonate, aluminum hydroxide, oxides, preferably titanium dioxide, talc, clay and/or mica.

12. The food casing as claimed in claim 11, wherein the fiber length or particle size of the inorganic filler is 0.1 to 3000 µm, preferably 0.1 to 500 µm, particularly preferably 1 to 250 µm.

13. The food casing as claimed in claim 11, wherein the glass microbeads have a mean particle size of 1 to 250 µm, preferably 2 to 150 µm, preferably consisting on average of 70 to 73 % by weight of SiO₂, 13 to 15 % by weight of Na₂O, 7 to 11 % by weight of CaO, 3 to 5 % by weight of MgO, 0.5 to 2.0 % by weight of Al₂O₃ and 0.20 to 0.60 of K₂O.

14. The food casing as claimed in claim 13, wherein the surface of the glass microbeads is modified with an adhesion promoter which enhances the adhesion to surrounding polymers.

15. The food casing as claimed in one or more of claims 1 to 14, wherein the thermoplastic mixture additionally comprises at least one ionomer, a (meth)acrylic ester polymer and/or a vinyl ester polymer.

16. The food casing as claimed in claim 15, wherein the ionomer is an ethylene/(meth)acrylic acid copolymer in which some of the carboxyl groups are if appropriate present as zinc or sodium carboxylate groups.

17. The food casing as claimed in claim 15, wherein the (meth)acrylic ester copolymer is an ethylene/methyl acrylate copolymer, ethylene/ethyl acrylate copolymer and/or an ethylene/butyl acrylate copolymer.

18. The food casing as claimed in claim 15, wherein the vinyl ester polymer is a poly(vinyl acetate), an ethylene/vinyl acetate copolymer, a copolymer containing units of vinyl acetate and 2-ethylhexyl acrylate, crotonic acid, vinyl chloride, vinyl laurate, dibutyl maleate, dioctyl maleate or maleic anhydride, a terpolymer containing units of vinyl acetate, butyl acrylate and N-(2-hydroxyethyl)acrylamide, a terpolymer containing units of vinyl acetate, ethylene and vinyl chloride, or a terpolymer containing units of vinyl acetate, ethylene and acrylamide.

19. The food casing as claimed in claims 14 to 18, wherein the content of ionomer, (meth)acrylic ester polymer and/or vinyl ester polymer is 1 to 30 % by weight, preferably 1.5 to 25 % by weight, particularly preferably 2 to 17 % by weight, in each case based on the total weight of the thermoplastic mixture.

20. The food casing as claimed in one of more of claims 1 to 19, wherein it additionally comprises a plasticizer, preferably dimethyl sulfoxide, butane-1,3-diol, glycerol, water, ethylene glycol, butylene glycol, diglyceride, diglycol ether, formamide, N-methylformamide, N,N-dimethylformamide, N,N-dimethylurea, N,N-dimethylacetamide, N-methylacetamide, poly-(alkylene oxide), glycerol mono-, di- or triacetate, sorbitol, erythritol, mannitol, gluconic acid, galacturonic acid, glucaric acid, glucuronic acid, polyhydroxycarboxylic acids, glucose, fructose, sucrose, citric acid, citric acid derivatives, or poly(vinyl alcohol), the content of plasticizer being up to 30 % by weight, preferably 1 to 25 % by weight, particularly preferably 2 to 20 % by weight, in each case based on the total weight of the thermoplastic mixture.

21. A process for producing a food casing as claimed in one or more of claims 1 to 20, which comprises extruding or coextruding the thermoplastic mixture having at least one aliphatic polyamide and/or copolyamide and at least one carbohydrate as organic filler and blow-forming or biaxially stretch-orienting the resultant flexible tube.

22. The process as claimed in claim 21, wherein the flexible tube is finally processed to give sections tied off at one end or to give a shirred stick.

23. The process as claimed in claim 21, wherein the flexible tube is further processed to give a natural gut-skin-like shape, in particular the ring sausage skin or fat end.

24. The use of the food casing as claimed in one or more of claims 1 to 20 as artificial sausage casing, preferably for scalded-emulsion sausage.

## Revendications

1. Enveloppe monocouche ou multicouche pour produit alimentaire, constituée d'un mélange thermoplastique comportant au moins un polyamide aliphatique et/ou un copolyamide aliphatique, **caractérisée en ce que** le mélange comprend au moins un glucide en tant que charge organique et l'enveloppe présente une profondeur de rugosité maximale Rₘₐₓ, déterminée selon DIN 4768, de 6 à 60 µm, une rugosité moyenne Rₐ, déterminée selon DIN 4762, de 1,2 à 10 µm et une perméabilité à la vapeur d'eau, à une épaisseur moyenne de 100 µm, déterminée selon DIN 53122, de moins de 50 g/m².d.

2. Enveloppe pour produit alimentaire selon la revendication 1, **caractérisée en ce qu'**elle présente une perméabilité à la vapeur d'eau, déterminée selon DIN 53122, de 1 à 49 g/m².d.

3. Enveloppe pour produit alimentaire selon la revendication 1 ou 2, **caractérisée en ce que** le (co)polyamide aliphatique consiste en PA-4.6, PA-6, PA-6.6, PA-6/6.6, PA-6.9, PA-6.10, PA-6.12, PA-6/66.9, PA-6/66.12 ou PA-12.

4. Enveloppe pour produit alimentaire selon une ou plusieurs des revendications 1 à 3, **caractérisée en ce que** le mélange thermoplastique en outre contient au moins un copolyamide aliphatique et/ou partiellement aromatique comportant des motifs glycol et/ou polyglycol.

5. Enveloppe pour produit alimentaire selon la revendication 4, **caractérisée en ce que** le copolyamide aliphatique et/ou partiellement aromatique comportant des motifs glycol et/ou polyglycol comporte
a) au moins une fraction amide à motifs constitués
a1) d'amines aliphatiques et/ou cycloaliphatiques au moins bifonctionnelles et d'acides carboxyliques aliphatiques et/ou cycloaliphatiques et/ou aromatiques au moins bifonctionnels, ou
a2) d'acides aminocarboxyliques aliphatiques ou de leurs lactames ou
a3) de mélanges de a1) et a2) et
b) au moins une fraction glycol ou polyglycol à motifs constitués
b1) d'un alcool aliphatique et/ou cycloaliphatique au moins bifonctionnel, ayant de 2 à 15 atomes de carbone, en particulier de 2 à 6 atomes de carbone ou
b2) d'au moins un oligo- ou polyglycol à base d'un des alcools cités en b1) ou
b3) d'au moins un oligo- ou polyglycol aliphatique du type cité en b2), dont les groupes hydroxy en bout de chaîne sont remplacés par des groupes amino, ou
b4) d'un mélange de b1), b2) et/ou b3) ou
b5) d'une fraction polyglycolique contenant des esters, formée à partir d'alcools aliphatiques au moins bifonctionnels et d'acides dicarboxyliques aliphatiques, cycloaliphatiques et/ou aromatiques au moins divalents ou
b6) d'un mélange de b1), b2) et/ou b5).

6. Enveloppe pour produit alimentaire selon une ou plusieurs des revendications 1 à 5, **caractérisée en ce que** la teneur en (co)polyamide va de 50 à 99 % en poids, de préférence de 60 à 98 % en poids, de façon particulièrement préférée de 65 à 98 % en poids, et la teneur totale en charge organique et/ou en charge inorganique va de 1 à 50 % en poids, de préférence de 2 à 40 % en poids, de façon particulièrement préférée de 2 à 35 % en poids, chaque fois par rapport au poids total du mélange thermoplastique.

7. Enveloppe pour produit alimentaire selon la revendication 4, **caractérisée en ce que** la teneur en (co)polyamide va de 35 à 98 % en poids, de préférence de 45 à 97 % en poids, de façon particulièrement préférée de 55 à 97 % en poids, la teneur en copolymère éther/amide va de 1 à 35 % en poids, de préférence de 2 à 30 % en poids, de façon particulièrement préférée de 3 à 25 % en poids, et la teneur en charge va de 1 à 50 % en poids, de préférence de 1 à 40 % en poids, de façon particulièrement préférée de 2 à 35 % en poids, chaque fois par rapport au poids total du mélange thermoplastique.

8. Enveloppe pour produit alimentaire selon une ou plusieurs des revendications 1 à 7, **caractérisée en ce que** le glucide est un polysaccharide naturel et/ou un dérivé de celui-ci ou un polysaccharide ramifié ou réticulé et/ou un dérivé de celui-ci.

9. Enveloppe pour produit alimentaire selon une ou plusieurs des revendications 1 à 8, **caractérisée en ce que** le mélange comprend une autre charge organique, de préférence des fibres synthétiques ou une poudre synthétique, de façon particulièrement préférée une fibre ou une poudre à base de polymères fluorés, polysulfones, polyéthersulfones, polyéthercétones, poly(sulfure de phénylène)s, polyaramides, polyimides, polyesters aromatiques, polyquinoxalines, polyquinoléines, polybenzimidazoles, polymères de type cristal liquide ou polymères conducteurs, dont la longueur de fibre ou la taille de grain va en général de 5 à 3 000 µm, de préférence de 10 à 1 000 µm, de façon particulièrement préférée de 15 à 500 µm.

10. Enveloppe pour produit alimentaire selon une ou plusieurs des revendications 1 à 9, **caractérisée en ce que** la charge a un grand pouvoir de gonflement, une substance contenant des groupes sulfate, carboxylate ou phosphate, une substance contenant des sels d'ammonium quaternaire, un épaississant organique, une substance naturelle organique modifiée, un épaississant inorganique, un épaississant entièrement synthétique ou un superabsorbant à base de polyacrylate ou polyméthacrylate étant préférés.

11. Enveloppe pour produit alimentaire selon une ou plusieurs des revendications 1 à 10, **caractérisée en ce que** le mélange comprend au moins une charge inorganique, de préférence des fibres et/ou des billes, de façon particulièrement préférée des filaments de verre, des fibres de verre coupées, des microbilles de verre, des fibres de laine minérale, des fibres courtes de laine de roche, des fibres de carbone, des zéolithes, du quartz, des billes creuses de silicate d'aluminium, du dioxyde de silicium, des acides siliciques, des sulfates, tels que le sulfate de baryum ou le sulfate de calcium, des carbonates, tels que le carbonate de calcium et le carbonate de magnésium, de l'hydroxyde d'aluminium, des oxydes tels que le dioxyde de titane, le talc, l'argile et/ou le mica.

12. Enveloppe pour produit alimentaire selon la revendication 11, **caractérisée en ce que** la longueur de fibre ou la taille de grain de la charge inorganique va de 0,1 à 3 000 µm, de préférence de 0,1 à 500, de façon particulièrement préférée de 1 à 250 µm.

13. Enveloppe pour produit alimentaire selon la revendication 11, **caractérisée en ce que** les microbilles de verre ont une taille moyenne de grain de 1 à 250 µm, de préférence de 2 à 150 µm, celles-ci étant de préférence constituées en moyenne de 70 à 73 % en poids de SiO₂, de 13 à 15 % en poids de Na₂O, de 7 à 11 % en poids de CaO, de 3 à 5 % en poids de MgO, de 0,5 à 2,0 % en poids d'Al₂O₃ et de 0,20 à 0,60 % en poids de K₂O.

14. Enveloppe pour produit alimentaire selon la revendication 13, **caractérisée en ce que** la surface des microbilles de verre est modifiée par un promoteur d'adhérence qui améliore l'adhérence à des polymères environnants.

15. Enveloppe pour produit alimentaire selon une ou plusieurs des revendications 1 à 14, **caractérisée en ce que** le mélange thermoplastique en outre contient au moins un ionomère, un polymère d'ester d'acide (méth)acrylique et/ou un polymère d'ester vinylique.

16. Enveloppe pour produit alimentaire selon la revendication 15, **caractérisée en ce que** l'ionomère est un copolymère éthylène/acide(méth)acrylique, dans lequel une partie des groupes carboxy se trouvent éventuellement sous forme de groupes carboxylate de sodium ou de zinc.

17. Enveloppe pour produit alimentaire selon la revendication 15, **caractérisée en ce que** le copolymère d'ester d'acide (méth)acrylique est un copolymère éthylène/acrylate de méthyle, éthylène/acrylate d'éthyle et/ou un copolymère éthylène/acrylate de butyle.

18. Enveloppe pour produit alimentaire selon la revendication 15, **caractérisée en ce que** le polymère d'ester vinylique est un poly(acétate de vinyle), un copolymère éthylène/acétate de vinyle, un copolymère comportant des motifs d'acétate de vinyle et d'acrylate de 2-éthyl-hexyle, acide crotonique, chlorure de vinyle, laurate de vinyle, maléate de dibutyle, maléate de dioctyle ou anhydride maléique, un terpolymère comportant des motifs d'acétate de vinyle, acrylate de butyle et N-(2-hydroxyéthyl)acrylamide, un terpolymère comportant des motifs d'acétate de vinyle, éthylène et chlorure de vinyle ou un terpolymère comportant des motifs d'acétate de vinyle, éthylène et acrylamide.

19. Enveloppe pour produit alimentaire selon les revendications 14 à 18, **caractérisée en ce que** la teneur en ionomère, polymère d'ester d'acide (méth)acrylique et/ou polymère d'ester vinylique va de 1 à 30 % en poids, de préférence de 1,5 à 25 % en poids, de façon particulièrement préférée de 2 à 17 % en poids, chaque fois par rapport au poids total du mélange thermoplastique.

20. Enveloppe pour produit alimentaire selon une ou plusieurs des revendications 1 à 19, **caractérisée en ce qu'**elle contient en outre un plastifiant, de préférence du diméthylsulfoxyde, du butane-1,3-diol, du glycérol, de l'eau, de l'éthylèneglycol, du butylèneglycol, du diglycéride, du diglycoléther, du formamide, du N-méthylformamide, du N,N-diméthylformamide, de la N,N-diméthylurée, du N,N-diméthylacétamide, du N-méthylacétamide, du poly(oxyalkylène), du mono-, di- ou triacétate de glycérol, du sorbitol, de l'érythritol, du mannitol, de l'acide gluconique, de l'acide galacturonique, de l'acide glucarique, de l'acide glucuronique, des acides polyhydroxycarboxyliques, du glucose, du fructose, du saccharose, de l'acide citrique, des dérivés d'acide citrique ou du poly(alcool vinylique), la proportion du plastifiant allant jusqu'à 30 % en poids, de préférence de 1 à 25 % en poids, de façon particulièrement préférée de 2 à 20 % en poids, chaque fois par rapport au poids total du mélange thermoplastique.

21. Procédé pour la fabrication d'une enveloppe pour produit alimentaire selon une ou plusieurs des revendications 1 à 20, **caractérisé en ce que** le mélange thermoplastique comportant au moins un polyamide aliphatique et/ou un copolyamide aliphatique et au moins un glucide en tant que charge organique est extrudé ou coextrudé et le boyau qui en résulte est moulé par soufflage ou orienté par étirage biaxial.

22. Procédé selon la revendication 21, **caractérisé en ce que** le boyau est ensuite mis sous forme de segments ligaturés d'un côté ou d'une chenille plissée.

23. Procédé selon la revendication 21, **caractérisé en ce que** le boyau est ensuite mis en une forme ressemblant au boyau naturel, en particulier de boyau en couronne ou "Fettende".

24. Utilisation de l'enveloppe pour produit alimentaire selon une ou plusieurs des revendications 1 à 20, en tant qu'enveloppe artificielle pour saucisses, en particulier pour saucisse à bouillir.
